**Europäisches Patentamt**

**European Patent Office**

**Office européen des brevets**

(19)

(11) Veröffentlichungsnummer : **0 056 429**
**B1**

(12) ## EUROPÄISCHE PATENTSCHRIFT

(45) Veröffentlichungstag der Patentschrift :
**30.01.85**

(51) Int. Cl.⁴ : **B 60 T 17/00**

(21) Anmeldenummer : **81107804.7**

(22) Anmeldetag : **01.10.81**

(54) **Einrichtung zum Einbringen von Fluiden, insbesondere Frostschutzmittel in Druckluftanlagen.**

(30) Priorität : **21.01.81 DE 3101685**

(43) Veröffentlichungstag der Anmeldung :
**28.07.82 Patentblatt 82/30**

(45) Bekanntmachung des Hinweises auf die Patenterteilung : **30.01.85 Patentblatt 85/05**

(84) Benannte Vertragsstaaten :
**AT CH LI NL SE**

(56) Entgegenhaltungen :
**EP-A- 0 054 630**
**AT-B- 262 087**
**DD-B- 115 741**
**DE-A- 2 608 816**
**DE-B- 1 179 469**
**DE-U- 1 736 451**

(73) Patentinhaber : **WABCO Westinghouse Steuerungstechnik GmbH & Co.
Bartweg 13 Postfach 91 12 70
D-3000 Hannover 91 (DE)**

(72) Erfinder : **Lehnert, Erhard
Theodor Heuss Strasse 3
D-3161 Dollbergen (DE)**

(74) Vertreter : **Schrödter, Manfred
WABCO Westinghouse Fahrzeugbremsen GmbH Am
Lindener Hafen 21 Postfach 91 12 80
D-3000 Hannover 91 (DE)**

## Beschreibung

Die Erfindung betrifft eine Einrichtung zum Einbringen von Fluiden, insbesondere Frostschutzmittel, in Druckluftanlagen, insbesondere in Druckluftbremsanlagen von Fahrzeugen gemäß dem Oberbegriff des Anspruchs 1.

Eine derartige, als Frostschutzpumpe dienende Einrichtung wird in der DE-PS 11 79 469 gezeigt und beschrieben. In dieser Einrichtung ist ein erstes Rückschlagventil vorgesehen, über welches eine von der Druckluft durchströmte Mischkammer mit einer Speicherkammer verbindbar ist. Die Speicherkammer dient zur Speicherung einer vom Volumen der Speicherkammer vorgegebenen Menge Frostschutzmittels, welches von einem Vorratsbehälter über ein zweites Rückschlagventil in die Speicherkammer gelangt.

Das erste Rückschlagventil befindet sich bei druckentlasteter Mischkammer in der Schließstellung und das zweite Rückschlagventil in der Offenstellung. Die Speicherkammer wird von einem Förderkolben begrenzt, in Abhängigkeit von dessen Stellung bzw. von dessen Bewegungsrichtung das zweite Rückschlagventil und das erste Rückschlagventil in die Schließstellung bzw. in die Offenstellung bringbar sind. Der Förderkolben ist mit einem Betätigungskolben verbunden, welcher die Mischkammer begrenzt und von der die Mischkammer durchströmenden Druckluft gegen die Kraft einer Feder verschiebbar ist.

Durch die Anordnung eines zweiten Rückschlagventils wird verhindert, daß bei einem Förderhub des Förderkolbens und der daraus resultierenden Verringerung des Volumens der Speicherkammer das Frostschutzmittel in den Vorratsbehälter zurückgedrückt wird. Das vom Vorratsbehälter in die Speicherkammer einfließende Frostschutzmittel wird vom Förderkolben in Richtung auf die Druckmittelleitung zu aus der Speicherkammer verdrängt.

Es kann bei dieser bekannten Einrichtung passieren, daß bei mehreren dicht aufeinanderfolgenden Hüben des Förderkolbens die Speicherkammer nicht vollständig gefüllt wird, so daß nur ein Teil der gewünschten Menge des Frostschutzmittels in die Druckluftleitung eingebracht wird.

Der Frostschutzmitteleinspritzvorgang in die von der Druckluft durchströmte Kammer erfolgt immer während des Belüftungsvorganges der Druckluftleitung, d. h. immer dann, wenn sich beim Einsteuern von Druckluft in die Druckluftleitung der Druck in der Druckluftleitung aufbaut.

Um das Frostschutzmittel vom Frostschutzmittel-Vorratsbehälter in die Speicherkammer einbringen zu können ist es erforderlich, den Frostschutzmittel-Vorratsbehälter oberhalb der Speicherkammer auf dem Pumpengehäuse anzuordnen, so daß das Frostschutzmittel vom Frostschutzmittel-Vorratsbehälter zur Speicherkammer fließen kann.

Diese Anordnung hat den Nachteil, daß die Frostschutz-pumpe mit dem relativ großen Frostschutzmittel-Vorratsbehälter recht raumaufwendig ist, was zu Problemen bei der Montage, z. B. in Druckluftbremsanlagen von Fahrzeugen führen kann.

Der Erfindung liegt deshalb die Aufgabe zugrunde, eine Einrichtung der eingangs genannten Art zu schaffen, welche sicherstellt, daß bei jedem Schaltvorgang die gewünschte Menge des Fluids in die Druckluftanlage gelangt und welche geringeren Platzaufwand erfordert.

Diese Aufgabe wird mit der im Anspruch 1 angegebenen Erfindung gelöst.

Vorteilhafte Ausgestaltungen und Weiterbildungen der Erfindung sind in den Unteransprüchen aufgezeigt.

Durch die Erfindung wird insbesondere der Vorteil erzielt, daß sichergestellt ist, daß bei jedem Schaltvorgang, unabhängig von der angesaugten Menge des Fluids eine gewünschte, regelbare Einspritzmenge zur Verfügung steht.

Da das Fluid nicht in der Druckaufbauphase, d. h. beim Belüften der Druckluftleitung (Einschalten der Drucklufterzeugungseinrichtung), sondern in der Druckabbauphase, d. h. beim Entlüften der Druckluftleitung zum Verbraucher hin (Abschalten der Drucklufterzeugungseinrichtung) in die Druckluftleitung eingespritzt wird, wird eine günstigere Verteilung des Fluids in der Druckluftanlage erzielt.

Ein besonderer Vorteil der Erfindung ist auch darin zu sehen, daß das Ansaugen und somit das Einbringen des Fluids in die Speicherkammer sowie das Einspritzen des Fluids in die Druckluftleitung mit einem Schaltvorgang durchgeführt wird.

Da das Fluid von der Einrichtung (Pumpe) angesaugt wird, kann der Vorratsbehälter von der Einrichtung (Pumpe) örtlich getrennt untergebracht werden.

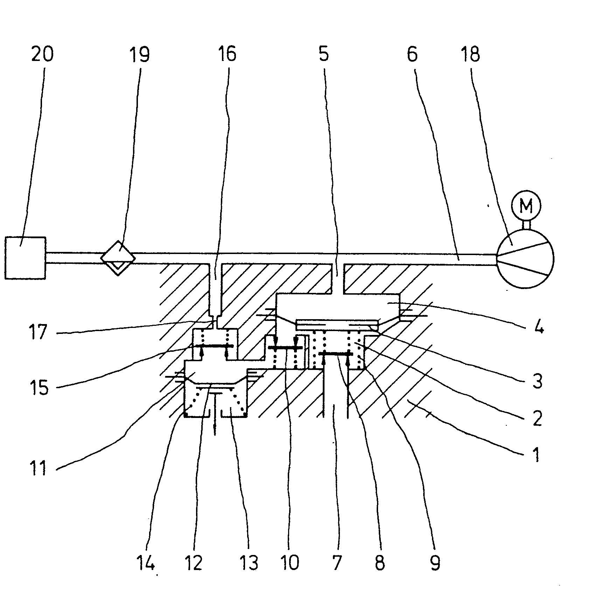

Die Erfindung wird nachstehend anhand eines in der Zeichnung dargestellten Ausführungsbeispiels näher erläutert.

In der Abbildung ist schematisch eine als Frostschutzpumpe dienende Einrichtung zum Einbringen von Fluiden in eine Druckluftanlage dargestellt, welche an eine Druckluftleitung angeschlossen ist, die einerseits mit einer Druckmittelquelle und andererseits mit einem Druckluftverbraucher verbunden ist.

In einem Gehäuse 1 ist eine Speicherkammer 2 zur Speicherung von Frostschutzmittel vorgesehen. Die Speicherkammer 2 wird durch eine als Förderkolben 3 dienende, mit einer metallenden Verstärkung versehenen Membran von einer Kammer 4 getrennt, die über einen Anschluß 5 mit einer Druckluftleitung 6 verbunden ist. Über einen Anschluß 7 steht die Speicherkammer 2 mit einem hier nicht gezeigten Frostschutzmittel-Vorratsbehälter in Verbindung. Ein in der Speicherkammer 2, am Anschluß 7 angeordnetes, zur Speicherkammer 2 hin öffnendes Rück-

schlagventil 8 verschließt den Anschluß 7. Der Förderkolben 3 wird von einer in der Speicherkammer 2 angeordneten Druckfeder 9 in Richtung auf die Kammer 4 zu beaufschlagt. Die Speicherkammer 2 ist über ein weiteres Rückschlagventil 10 mit einer Dosierkammer 11 verbindbar, wobei das Rückschlagventil 10 so angeordnet ist, daß es zur Dosierkammer 11 hin öffnet. Eine Wand der Dosierkammer 11 wird von einer als Dosierkolben 12 dienenden, mit einer metallenden Verstärkung versehenen Membran gebildet. Der Dosierkolben 12 wird von einer sich am Boden einer Gehäuseausnehmung 13 abstützenden Druckfeder 14 in Richtung auf die Dosierkammer 11 zu beaufschlagt. Die Dosierkammer 11 ist über ein Rückschlagventil 15 und eine mit einer Drosselstelle 17 versehenen Bohrung 16 mit der Druckluftleitung 6 verbindbar. Das Rückschlagventil 15 ist so ausgebildet und angeordnet, daß es zur Bohrung 16 hin öffnet. Die Druckluftleitung 6 ist einerseits mit einer Druckmittelquelle 18 und andererseits über ein Entwässerungsventil 19 mit einem Verbraucher 20 verbunden.

Nachstehend wird die Funktion der erfindungsgemäßen Einrichtung näher erläutert.

Es wird angenommen, daß von der Druckmittelquelle Druckluft in die Druckluftleitung 6 eingespeist wird und durch diese zum Verbraucher 20 strömt. Gleichzeitig gelangt Druckluft über den Anschluß 5 in die Kammer 4 und in die Bohrung 16. Der sich in der Kammer 4 aufbauende Druck verschiebt den Förderkolben 3 gegen die Kraft der Druckfeder 9 in Richtung auf die Speicherkammer 2 zu. Das in der Speicherkammer 2 am Anschluß 7 angeordnete Rückschlagventil 8 ist geschlossen und das die Speicherkammer 2 von der Dosierkammer 11 trennende Rückschlagventil 10 wird nun durch die durch die Verschiebung des Förderkolbens 3 in der Speicherkammer 2 komprimierte Luft geöffnet. Die in der Speicherkammer 2 komprimierte Luft strömt nun in die Dosierkammer 11. Da in der Bohrung 16 und somit auch am Rückschlagventil 15 Druckluft aus der Druckluftleitung 6 ansteht, kann die in die Dosierkammer 11 einströmende Luft nicht entweichen. Der sich in der Dosierkammer 11 aufbauende Druck verschiebt den Dosierkolben 12 entgegen der Druckfeder 14 in Richtung auf die Gehäuseausnehmung 13 zu.

Wird nun die Druckmittelquelle 18 abgesperrt und das Entwässerungsventil 19 geöffnet, so sinkt der Druck in der Druckluftleitung 6 und somit auch in der Kammer 4 sowie in der Bohrung 16 ab. Ist der Druck in der Druckluftleitung 6 auf einen Wert abgesunken, der unterhalb des Druckwertes liegt, welcher aus der Kraft der Druckfeder 14 und der Kraft des in der Dosierkammer 11 herrschenden Druckes resultiert, öffnet das Rückschlagventil 15 und die Dosierkammer 11 wird entlüftet. Gleichzeitig wird, bedingt durch den Druckabfall in der Kammer 4, der Förderkolben 3 von der Druckfeder 9 in Richtung auf die Kammer 4 zu verschoben. Da das die Speicherkammer 2 mit der Dosierkammer 11 verbindende Rückschlagventil 10 jetzt wieder geschlossen ist, entsteht durch die Verschiebung des Förderkolbens 3 vom Rückschlagventil 8 weg ein Vakuum in der Speicherkammer 2, wodurch das die Speicherkammer 2 mit dem Anschluß 7 für das Frostschutzmittel verbindende Rückschlagventil 8 öffnet und Frostschutzmittel angesaugt wird.

Wird erneut von der Druckmittelquelle Druckluft in die Druckluftleitung 6 eingespeist, baut sich in der Kammer 4 Druck auf und verschiebt den Förderkolben 3 wieder in Richtung auf die Speicherkammer 2 zu und das Rückschlagventil 8 schließt. Da sich bei diesem Vorgang das Volumen der Speicherkammer 2 verringert weicht das in der Speicherkammer 2 befindliche Frostschutzmittel in Richtung auf die Dosierkammer 11 zu aus und öffnet dabei das die Speicherkammer 2 mit der Dosierkammer 11 verbindende Rückschlagventil 10. Das Frostschutzmittel wird aus der Speicherkammer 2 heraus und in die Dosierkammer 11 gedrückt. Da auch in der Bohrung 16 und somit am die Dosierkammer 11 mit der Druckluftleitung 6 verbindenden Rückschlagventil 15 Druckluft ansteht, kann das Frostschutzmittel nur in Richtung auf den Dosierkolben 12 zu ausweichen, wodurch der Dosierkolben 12 gegen die Kraft der Druckfeder 14 in Richtung auf die Gehäuseausnehmung 13 zu verschoben wird und sich das Volumen der Dosierkammer 11 vergrößert.

Wird die Druckmittelquelle 18 wieder abgesperrt und das Entwässerungsventil 8 geöffnet, so sinkt der Druck in der Druckluftleitung 6, in der Kammer 4 und in der Bohrung 16 ab. Das die Dosierkammer 11 mit der Druckluftleitung 6 verbindende Rückschlagventil 15 öffnet und das Frostschutzmittel wird mittels des Dosierkolbens 12 über die Bohrung 16 in dem sich langsam weiter abschwächenden Druckluftstrom in der Druckluftleitung 6 eingespritzt. Die in der Speicherkammer 2 angeordnete Druckfeder 9 schiebt den Förderkolben 3 wieder vom Rückschlagventil 8 weg, wobei wieder Frostschutzmittel aus dem Frostschutzmittel-Vorratsbehälter in die Speicherkammer 2 angesaugt wird. Sollte die Frostschutzpumpe eine Zeitlang nicht betätigt worden sein und sich aus diesem Grund in der vom Frostschutzmittel-Vorratsbehälter zur Speicherkammer 2 führenden Leitung sowie auch zum Teil in der Speicherkammer 2 Luft befindet, ist es möglich, die Leitung und auch die Speicherkammer schnell zu entlüften, da die Speicherkammer 2 ein größeres Volumen aufweist als die Dosierkammer 11, so daß ein großes entspanntes Luftvolumen vom Förderkolben 3 angesaugt und in der Dosierkammer 11 komprimiert werden kann.

**Ansprüche**

1. Einrichtung zum Einbringen von Fluiden, insbesondere Frostschutzmittel, in Druckluftanlagen, insbesondere in Druckluftbremsanlagen von Fahrzeugen, welche die folgenden Merkmale umfaßt :

a) es ist eine mit einem Vorratsbehälter verbundene Speicherkammer (2) zur Speicherung des Fluids vorgesehen ;

b) es ist ein Förderkolben (3) zur Förderung des Fluids aus der Speicherkammer (2) in eine zwischen einer Druckluftquelle (18) und einem Druckluftverbraucher (20) angeordnete Druckluftleitung (6) vorgesehen ;

c) die Druckluftquelle (18) und der Druckluftverbraucher (20) sind so ausgebildet, daß der Druck in der Druckluftleitung (6) zwischen einem oberen und einem unteren Druckwert schwankt ;

d) zur Betätigung des Förderkolbens (3) ist dieser gegen eine erste Rückstellkraft von der Druckluft beaufschlagbar ;

e) zwischen der Speicherkammer (2) und der Druckluftleitung (6) ist ein zur Druckluftleitung (6) hin öffnendes erstes Rückschlagventil (15) vorgesehen ;

f) zwischen dem Vorratsbehälter und der Speicherkammer (2) ist ein zur Speicherkammer (2) hin öffnendes zweites Rückschlagventil (8) angeordnet ;
gekennzeichnet durch die folgenden Merkmale :

g) zwischen der Speicherkammer (2) und dem ersten Rückschlagventil (15) ist eine Dosierkammer (11) angeordnet ;

h) zwischen der Speicherkammer (2) und der Dosierkammer (11) ist ein zur Dosierkammer (11) hin öffnendes drittes Rückschlagventil (10) angeordnet ;

i) eine Wand der Dosierkammer (11) ist als abgedichtet verschiebbarer Dosierkolben (12) ausgebildet, der auf seiner der Dosierkammer (11) abgewandten Seite von einer zweiten Rückstellkraft beaufschlagbar ist ;

j) das erste Rückschlagventil (15) weist auf seiner der Dosierkammer (11) abgewandten Seite eine Wirkfläche auf, die direkt oder gedrosselt von der Druckluft in der Druckluftleitung (6, 16) beaufschlagt ist ;

k) das erste Rückschlagventil (15) ist einerseits so ausgebildet daß es bei der Förderung von Fluid aus der Speicherkammer (2) in die Dosierkammer (11) geschlossen ist ;

l) das erste Rückschlagventil (15) ist andererseits so ausgebildet, daß es bei einer Verringerung des Druckes in der Druckluftleitung (6, 16) geöffnet wird.

2. Einrichtung nach Anspruch 1, dadurch gekennzeichnet, daß die der Dosierkammer (11) abgewandte Seite des Dosierkolbens (12) von einer Druckfeder (14) beaufschlagt wird.

3. Einrichtung nach Anspruch 1, dadurch gekennzeichnet, daß die der Dosierkammer (11) abgewandte Seite des Dosierkolbens (12) eine Kammer begrenzt, welche über eine Verbindungsleitung mit der Druckluftleitung (6) in Verbindung steht.

4. Einrichtung nach Anspruch 1, dadurch gekennzeichnet, daß der Förderkolben (3) als Membrankolben ausgebildet ist.

5. Einrichtung nach Anspruch 1, dadurch gekennzeichnet, daß der Dosierkolben (12) als Membrankolben ausgebildet ist.

6. Einrichtung nach wenigstens einem der vorhergehenden Ansprüche, dadurch gekennzeichnet, daß die den Dosierkolben (12) beaufschlagende Rückstellkraft einstellbar ist.

7. Einrichtung nach Anspruch 1, dadurch gekennzeichnet, daß die Speicherkammer (2) ein größeres Volumen aufweist als die Dosierkammer (11), so daß beim Ansaugen von Fluid in die Speicherkammer (2) in diese mehr Fluid gelangt, als für den Einspritzvorgang über die Dosierkammer (11) benötigt wird.

8. Einrichtung nach Anspruch 1, dadurch gekennzeichnet, daß die Speicherkammer (2) und der Förderkolben (3) so dimensioniert sind, und daß auch die Dosierkammer (11) und der Dosierkolben (12) so dimensioniert sind, daß ein aus der zum Vorratsbehälter führenden Leitung angesaugtes großes entspanntes Luftvolumen in der Dosierkammer (11) komprimiert wird, so daß ein gegenüber dem Fluidvolumen Vielfaches an Luftvolumen befördert wird.

## Claims

1. Device for introducing fluids, especially antifreeze, into compressed air systems, especially into compressed air braking systems in vehicles, which includes the following features :

a) a storage chamber (2), connected to a reservoir, is provided for storing the fluid ;

b) a feed piston (3) is provided for conveying the fluid from the storage chamber (2) to a compressed air line (6) that is arranged between a compressed air source (18) and a compressed air consumer (20) ;

c) the compressed air source (18) and the compressed air consumer (20) are so constructed that the pressure in the compressed air line (6) varies between an upper and a lower pressure value ;

d) in order to actuate the feed piston (3) this can be acted upon by the compressed air against a first restoring force ;

e) between the storage chamber (2) and the compressed air line (6) there is provided a first non-return valve (15) which opens towards the compressed air line (6) ;

f) between the reservoir and the storage chamber (2) there is arranged a second non-return valve (8) which opens towards the storage chamber (2)
characterised by the following features :

g) between the storage chamber (2) and the first non-return valve (15) there is arranged a metering chamber (11) ;

h) between the storage chamber (2) and the metering chamber (11) there is arranged a third non-return valve (10) which opens towards the metering chamber (11) ;

i) one wall of the metering chamber (11) is constructed as a sealed displaceable metering piston (12) which on its side remote from the metering chamber (11) can be acted upon by a second restoring force ;

j) the first non-return valve (15) has on its side remote from the metering chamber (11) an operating surface which is acted upon, either directly or through a throttle, by the compressed air in the compressed air line (6, 16) ;

k) the first non-return valve (15) is on the one hand so constructed that it is closed when fluid is conveyed from the storage chamber (2) to the metering chamber (11) ;

l) the first non-return valve (15) is on the other hand so constructed that it is opened if the pressure in the compressed air line (6, 16) falls.

2. Device according to claim 1, characterised in that the side of the metering piston (12) remote from the metering chamber (11) is acted upon by a compression spring (14).

3. Device according to claim 1, characterised in that the side of the metering piston (12) remote from the metering chamber (11) defines a chamber that is connected to the compressed air line (6) by way of a connection line.

4. Device according to claim 1, characterised in that the feed piston (3) is constructed in the form of a diaphragm piston.

5. Device according to claim 1, characterised in that the metering piston (12) is constructed in the form of a diaphragm piston.

6. Device according to at least one of the preceding claims, characterised in that the restoring force acting upon the metering piston (12) can be adjusted.

7. Device according to claim 1, characterised in that the storage chamber (2) has a larger volume than the metering chamber (11) so that when fluid is sucked into the storage chamber (2), more fluid passes into the storage chamber than is necessary for the injection operation by way of the metering chamber (11).

8. Device according to claim 1, characterised in that the storage chamber (2) and the feed piston (3) are so dimensioned and that the metering chamber (11) and the metering piston (12) are also so dimensioned that a large expanded volume of air sucked in from the line leading to the reservoir is compressed in the metering chamber (11) so that the volume of air supplied is several times the volume of fluid.

**Revendications**

1. Dispositif pour introduire des fluides, en particulier de l'antigel, dans des installations à air comprimé, en particulier dans les freins à air comprimé de véhicules, dispositif ayant les particularités suivantes :

a) une chambre accumulatrice (2) raccordée à un réservoir est prévue pour accumuler le fluide ;

b) un piston de refoulement (3) est prévu pour refouler le fluide hors de la chambre accumulatrice (2) dans un conduit d'alimentation en air comprimé (6) disposé entre une source d'air comprimé (18) et un consommateur d'air comprimé (20) ;

c) La source d'air comprimé (18) et le consommateur d'air comprimé (20) sont réalisés de manière que la pression dans le conduit d'alimentation (6) oscille entre une valeur de pression supérieure et une valeur de pression inférieure ;

d) le piston de refoulement (3), en vue de son actionnement, est susceptible d'être chargé par l'air comprimé à l'encontre d'une première force de rappel ;

e) une première soupape antiretour (15), s'ouvrant vers le conduit d'alimentation (6), est prévue entre la chambre accumulatrice (2) et le conduit d'alimentation en air comprimé (6) ;

f) une deuxième soupape antiretour (8), s'ouvrant vers la chambre accumulatrice (2), est disposée entre le réservoir et la chambre accumulatrice (2) ;
caractérisé en ce que :

g) une chambre de dosage (11) est disposée entre la chambre accumulatrice (2) et la première soupape antiretour (15) ;

h) une troisième soupape antiretour (10), s'ouvrant vers la chambre de dosage (11), est disposée entre la chambre accumulatrice (2) et la chambre de dosage (11) ;

i) une paroi de la chambre de dosage (11) est formée par un piston doseur (12) qui peut coulisser avec maintien de l'étanchéité et qui est susceptible d'être chargé par une deuxième force de rappel sur son côté éloigné de la chambre de dosage (11) ;

j) la première soupape antiretour (15) présente, sur son côté éloigné de la chambre de dosage (11), une face utile qui est chargée directement ou de façon étranglée par l'air comprimé dans le conduit d'alimentation en air comprimé (6, 16) ;

k) la première soupape antiretour (15) est réalisée, d'une part, de manière qu'elle soit fermée lors de refoulement de fluide de la chambre accumulatrice (2) dans la chambre de dosage (11) ;

l) la première soupape antiretour (15) est réalisée, d'autre part, de manière qu'elle soit ouverte lors d'une réduction de la pression dans le conduit d'alimentation en air comprimé (6, 16).

2. Dispositif selon la revendication 1, caractérisé en ce que le piston doseur (12) est chargé par un ressort de compression (14) sur son côté éloigné de la chambre de dosage (11).

3. Dispositif selon la revendication 1, caractérisé en ce que, par son côté éloigné de la chambre de dosage (11), le piston doseur (12) délimite une chambre qui communique par un conduit de liaison avec le conduit d'alimentation en air comprimé (6).

4. Dispositif selon la revendication 1, caractérisé en ce que le piston de refoulement (3) est un piston-diaphragme.

5. Dispositif selon la revendication 1, caractérisé en ce que le piston doseur (12) est un piston-diaphragme.

6. Dispositif selon au moins une des revendications précédentes, caractérisé en ce que la force de rappel agissant sur le piston doseur (12) est réglable.

7. Dispositif selon la revendication 1, caractérisé en ce que la chambre accumulatrice (2) possède un plus grand volume que la chambre de dosage (11), si bien que, lors de l'aspiration de fluide dans la chambre accumulatrice (2), la quantité de fluide entrant dans celle-ci est plus grande que celle nécessaire à l'opération d'injection à travers la chambre de dosage (11).

8. Dispositif selon la revendication 1, caractérisé en ce que la chambre accumulatrice (2) et le piston de refoulement (3) sont dimensionnés, et que la chambre de dosage (11) et le piston doseur (12) sont également dimensionnés de manière qu'un grand volume d'air détendu aspiré du conduit menant au réservoir soit comprimé dans la chambre de dosage (11), ce qui produit le refoulement d'un volume d'air qui est un multiple du volume de fluide.